# EUROPEAN PATENT APPLICATION

(11) **EP 4 666 891 A2**
(43) Date of publication of application: **24.12.2025**
(21) Application number: 25214913.3
(22) Date of filing: 31.03.2023
(51) Int. Cl.: A24F 40/85

(54) **AEROSOL GENERATING DEVICE**

(30) Priority: 01.04.2022 KR 20220041123; 20.06.2022 KR 20220074824
(62) Divisional of application: 23781430.6
(71) Applicant: KT&G Corporation, Daedeok-gu Daejeon 34337 (KR)
(72) Inventor: AN, Hwikyeong, Seoul 02721 (KR)
(74) Representative: Schornack, Oliver

(57) **Abstract**

An aerosol generating device is provided. The aerosol generating device includes: an elongated body formed to provide an insertion space having an opening at a first end of the body and extending along a longitudinal direction of the body; a heater coupled to the body; a battery configured to supply power to the heater; a controller configured to control the power supplied to the heater; a through-hole formed at a second end of the body providing a passage between an inside and an outside of the body; and a membrane covering the through-hole.

## Description

### [Technical Field]

The present disclosure relates to an aerosol generating device.

### [Background Art]

An aerosol generating device is a device that extracts certain components from a medium or a substance by producing an aerosol. The medium may contain a multicomponent substance. The substance contained in the medium may be a multicomponent flavoring substance. For example, the substance contained in the medium may include a nicotine component, an herbal component, and/or a coffee component. Recently, various research on aerosol generating devices has been conducted.

### [Disclosure]

### [Technical Problem]

It is an objective of the present disclosure to solve the above and other problems.

It is another objective of the present disclosure to improve an air pressure difference between the inside and the outside of an aerosol generating device.

It is yet another objective of the present disclosure to provide an aerosol generating device with improved waterproof performance.

It is yet another objective of the present disclosure to provide an aerosol generating device with improved durability.

### [Technical Solution]

According to one aspect of the subject matter described in this application, an aerosol generating device includes: an elongated body formed to provide an insertion space having an opening at a first end of the body and extending along a longitudinal direction of the body; a heater coupled to the body; a battery configured to supply power to the heater; a controller configured to control the power supplied to the heater; a through-hole formed at a second end of the body providing a passage between an inside and an outside of the body; and a membrane covering the through-hole.

### [Advantageous Effects]

According to at least one of the embodiments of the present disclosure, an air pressure difference between the inside and outside of an aerosol generating device may be improved.

According to at least one of the embodiments of the present disclosure, waterproof performance may be improved.

Further scope of applicability of the present disclosure will become apparent from the following detailed description. However, it should be understood that the detailed description and specific embodiments such as preferred embodiments of the present disclosure are given by way of example only, since various changes and modifications within the idea and scope of the present disclosure may be clearly understood by those skilled in the art.

### [Description of Drawings]

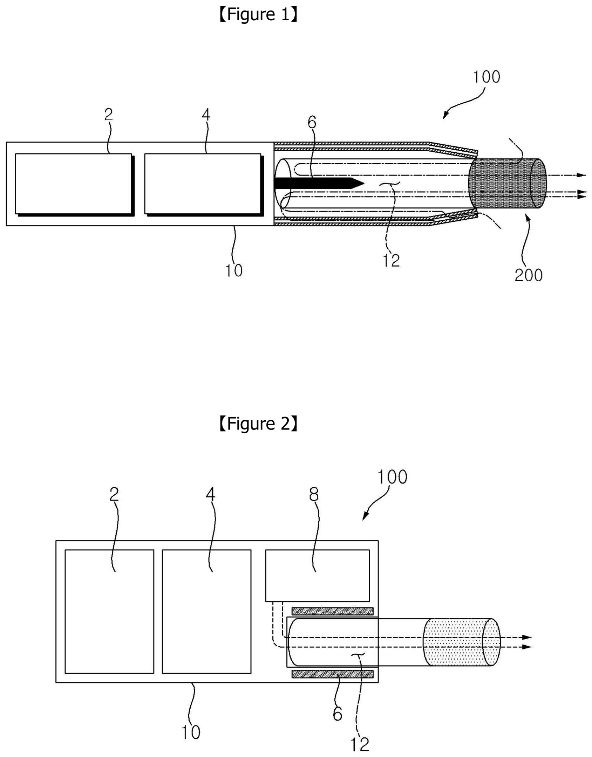

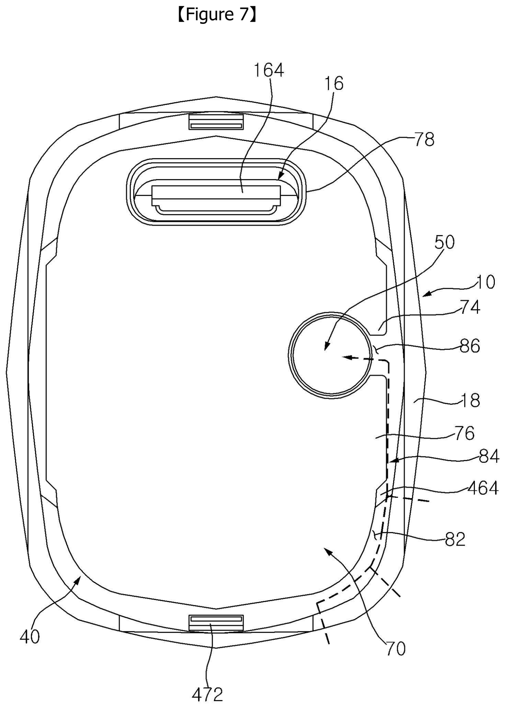

FIGS. 1 to 10 illustrate examples of an aerosol generating device according to embodiments of the present disclosure.

### [Mode for Invention]

Description will now be given in detail according to exemplary embodiments disclosed herein, with reference to the accompanying drawings. For the sake of brief description with reference to the drawings, the same or equivalent components are provided with the same or similar reference numerals, and description thereof will not be repeated.

In the following description, a suffix such as "module" and "unit" may be used to refer to elements or components. Use of such a suffix herein is merely intended to facilitate description of the specification, and the suffix itself is not intended to give any special meaning or function.

In the present disclosure, that which is well known to one of ordinary skill in the relevant art has generally been omitted for the sake of brevity. The accompanying drawings are used to help easily understand the technical idea of the present disclosure and it should be understood that the idea of the present disclosure is not limited by the accompanying drawings. The idea of the present disclosure should be construed to extend to any alterations, equivalents, and substitutes besides the accompanying drawings.

It will be understood that although the terms "first", "second", etc. may be used herein to describe various elements, these elements should not be limited by these terms. These terms are only used to distinguish one element from another.

It will be understood that when a component is referred to as being "connected to" or "coupled to" another component, it may be directly connected to or coupled to another component, or intervening components may be present. On the other hand, when a component is referred to as being "directly connected to" or "directly coupled to" another component, there are no intervening components present.

As used herein, a singular representation is intended to include a plural representation unless the context clearly indicates otherwise.

Referring to FIGS. 1 and 2, at least one of a battery 2, a controller 4, and a heater 6 may be disposed inside a body 10.

The battery 2, the controller 4, and the heater 6 may be arranged in a row. A cartridge 8 and the heater 6 may be arranged in parallel to face each other. The internal structure of an aerosol generating device 100 is not limited to those shown in FIGS. 1 and 2.

The aerosol generating device 100 may provide an insertion space 12. The insertion space 12 may be formed on one side of the aerosol generating device 100. A stick 200 may be inserted into the insertion space 12. The body 10 may be formed to provide the insertion space 12.

The heater 6 may be coupled to the body 10. The heater 6 may be disposed around the insertion space 12 or in the insertion space 12. The heater 6 may heat the insertion space 12 and/or the stick 200 inserted into the insertion space 12. The heater 6 may heat the stick 200 to generate an aerosol. The heater 6 may be an electro-resistive heater. For example, the heater 6 may be made of a conductive metal.

The heater 6 may protrude from a bottom of the insertion space 12 toward an open side of the insertion space 12. The heater 6 may have an elongated rod shape. The heater 6 may have a pointed top end (or tip). The stick 200 may be inserted into the insertion space 12, and the heater 6 may be inserted into the stick 200.

The heater 6 may generate heat directly using a current supplied from the battery 2. The heater 2 may heat the insertion space 12.

The heater 6 may surround the insertion space 12. The heater 6 may surround a lower portion of the stick 200 that is inserted into the insertion space 12. The heater 6 may extend in a circumferential direction along a circumference of the insertion space 12. The heater 6 may have a ring shape or a cylindrical shape.

The battery 2 may supply power to operate at least one of the controller 4, the heater 6, and the cartridge 8. The battery 2 may supply power required to operate a display (not shown), a sensor (not shown), a motor (not shown), and the like installed at the aerosol generating device 100.

The controller 4 may control the overall operation of the aerosol generating device 100. The controller 4 may control the operation of at least one of the battery 2, the heater 6, and the cartridge 8. The controller 4 may adjust power supplied to the heater 6. The controller 4 may control the operation of the display, the sensor, the motor, and the like installed at the aerosol generating device 100. The controller 4 may check the state of each of the components of the aerosol generating device 100 to determine whether the aerosol generating device 100 is in an operable state.

The cartridge 8 may store liquid therein. The cartridge 8 may generate an aerosol through the liquid stored therein. The aerosol generated in the cartridge 8 may pass through the stick 200 inserted into the aerosol generating device 100 and then flow to the airway of a user.

A lower end of the stick 200 may be inserted into the insertion space 12, and an upper end of the stick 200 may be exposed to the outside from the insertion space 12. The user may inhale air while holding the exposed upper end of the stick 200 in his or her mouth. Air may be introduced into the aerosol generating device 100, and then flow together with an aerosol to the airway of the user.

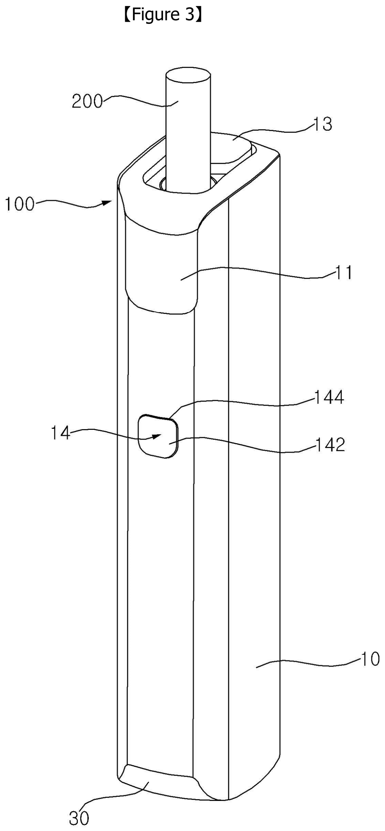

Referring to FIG. 3, the body 10 may be elongated. The body 10 may have the shape of a pipe with a hollow therein. The body 10 may include an opening (no reference numeral) that extends from the hollow to the outside. The opening may be formed on each of one side of the body 10 and another side of the body 10 opposite to the one side.

The insertion space 12 may extend in a longitudinal direction of the body 10 so as to be formed on one side of the body 10. The insertion space 12 may have a cylindrical shape. However, the present disclosure is not limited thereto, and the insertion space 13 may be formed in various shapes. For example, the insertion space 12 may have a cylindrical shape with a predetermined depth.

A key assembly 14 may be installed on one side of the body 10. A button key 142 may be disposed on the one side of the body 10. The one side of the body 10 may be open to define a button hole 144. The button key 142 may be inserted into the button hole 144. The button key 142 may move toward an inside of the body 10 when pressed, and may move to return to its original state.

The button key 142 may be connected to the controller 4. The user may transmit a command to the controller 4 by pressing the button key 142. For example, when the button key 142 is pressed, the aerosol generating device 100 may be operated or stopped in operation.

A head case 11 may be coupled to an upper portion of the body 10, and may cover the upper portion of the body 10. One side of the head case 11 may be open to communicate with the insertion space 12. The head case 11 may include a cap 13 to open and close the insertion space 12.

A cover 30 may cover the opening of the another side of the body 10. The cover 30 may have a shape corresponding to a cross section of the body 10 so as to cover the another side of the body 10. The cover 30 may be formed in various shapes such as a circular shape, a rectangular shape, an elliptical shape, and the like.

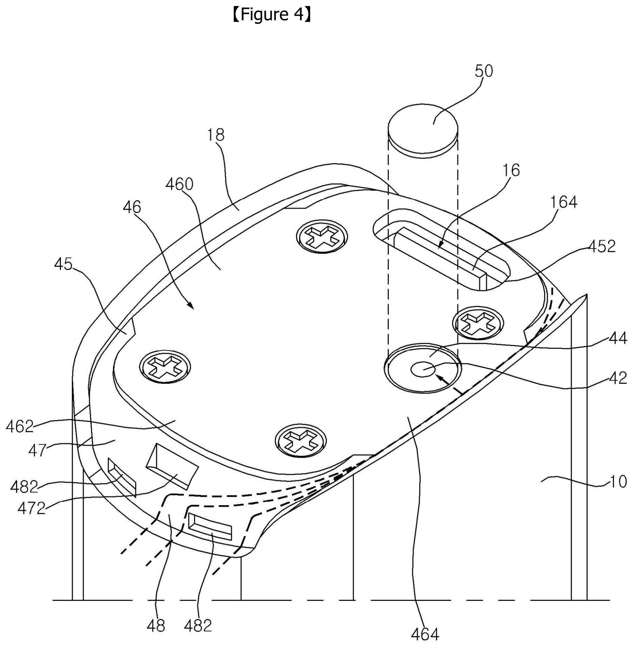

Referring to FIG. 4, the aerosol generating device 100 may include a through-hole 42 formed through the another side of the body 10 so as to allow the inside and outside of the body 10 to communicate with each other, and a membrane 50 covering the through-hole 42. The aerosol generating device 100 may further include a base 40 defining the another side of the body 10.

The through-hole 42 may be formed on the another side of the body 10 that is opposite to the one side of the body 10 where the insertion space 12 is formed. The through-hole 42 may have a cylindrical shape. However, the present disclosure is not limited thereto, and the through-hole 42 may be formed in various sizes and shapes. Air inside the body 10 and air outside the body 10 may be exchanged through the through-hole 42.

Accordingly, an air pressure difference between the inside and the outside of the aerosol generating device 100 may be improved.

The aerosol generating device 100 may further include the base 40 defining the another side of the body 10 that is opposite to the one side of the body 10 where the insertion space 12 is formed. The base 40 may have a shape with a cross section perpendicular to the longitudinal direction of the body 10. The base 40 may block or close the another side of the body 10.

The through-hole 42 may be formed in the base 40. The through-hole 42 may be formed through the base 40 along a thickness direction of the base 40, namely, the longitudinal direction of the body 10.

The base 40 may include a recessed portion 44 recessed in a vicinity of the through-hole 42. The recessed portion 44 may be recessed to a predetermined depth by being spaced apart from the through-hole 42. The recessed portion 44 may have the same shape as the through-hole 42. A size of the recessed portion 44 may be greater than a size of the through-hole 42. For example, the through-hole 42 and the recessed portion 44 may have the shape of a circle.

The membrane 50 may be placed or seated on the recessed portion 44. The recessed portion 44 may guide an installation position of the membrane 50. The recessed portion 44 may prevent separation of the membrane 50. For example, the membrane 50 may be seated on the recessed portion 44 recessed in the vicinity of the through-hole 42 of the base 40.

The base 40 may include a ground portion 45 to cover or close the opening of the another side of the body 10. The ground portion 45 may form a flat surface perpendicular to the longitudinal direction of the body 10. The ground portion 45 may form a curved surface with both end portions bent to one side. For example, the ground portion 45 may be configured as a curved surface having both end portions bent in the longitudinal direction of the body 10.

The base 40 may include a foundation 46. The foundation 46 may have a raised flat surface. The raised flat surface may be raised or elevated from the base 40 to allow a gasket 70 to be described later is seated thereon. The foundation 46 may be formed by being raised from the ground portion 45. A flow path or passage through which air flows may be formed between a side surface of the foundation 46 and an inner surface of the body 10. For example, a tapered passage 82 may be formed between the side surface of the foundation 46 and the inner surface of the body 10.

The base 40 may be bent to form a curved surface in the longitudinal direction of the body 10. The base 40 may include a base side portion 48 extending in a rounded manner. The base side portion 48 may be formed in the longitudinal direction of the body 10. The base side portion 48 may be in contact with the inner surface of the body 10. The base side portion 48 may be configured as a curved surface having a central portion extending outward.

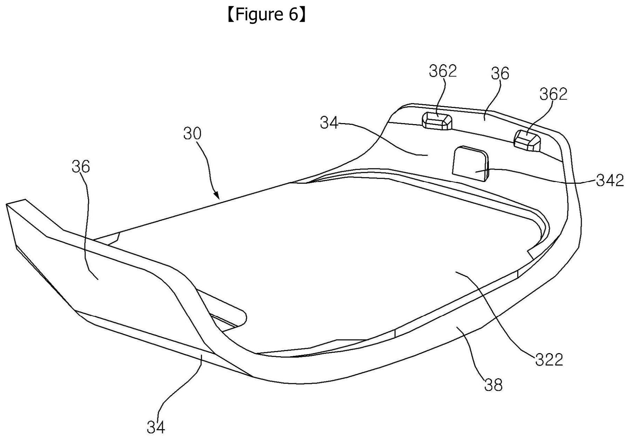

A recess 482 into which a protrusion 362 (see FIG. 6) to be described later is inserted may be formed in the base side portion 48. The protrusion 362 may be perpendicular to the base side portion 48, so as to protrude toward the inside of the body 10.

The base 40 may include a base rounding portion 47 rounded to form a curved surface. The base rounding portion 47 may be disposed between the ground portion 45 of the base 40 and the base side portion 48. The base rounding portion 47 may connect the ground portion 45 and the base side portion 48. The base rounding portion 47 may connect the ground portion 45 and the base side portion 48 in a curved shape.

The base rounding portion 47 may be formed in the shape of a curved surface with a central portion extending outward. A guide recess 472 into which a guide rib 342 (see FIG. 6) to be described later is inserted may be formed in the base rounding portion 47. The guide recess 472 may be formed in the longitudinal direction of the body 10. The guide recess 472 may be perpendicular to the base 40, so as to protrude toward the inside of the body 10. The guide recess 472 may be provided in plurality.

The aerosol generating device 100 may further include a charging module 16 to charge the battery 2. The charging module 16 may include a charging terminal 164. The charging terminal 164 may be connected to the battery 2. The charging terminal 164 may penetrate through the base 40 to be exposed to the outside. A charging hole 452 through which the charging terminal 164 passes may be formed in the base 40. The charging hole 452 may be formed in various shapes and sizes. For example, the charging hole 452 have a rectangular shape with rounded corners.

The membrane 50 may be disposed at an inlet or an outlet of the through- hole 42. The membrane 50 may be disposed in the through-hole 42. The membrane 50 may be disposed on an outer surface of the base 40. The membrane 50 may be disposed outside the body 10. The membrane 50 may be a film. The membrane 50 may be a functional membrane. The membrane 50 may selectively allow fluid to pass therethrough. The membrane 50 may not allow liquid to pass therethrough. The membrane 50 may allow gas to pass therethrough. The membrane 50 may allow gas to pass in both directions while allowing liquid to pass in only one direction. The membrane 50 may allow liquid flowing from the inside to the outside of the body 10 to pass therethrough while blocking liquid flowing from the outside to the inside of the body 10. The membrane 50 may discharge liquid inside the aerosol generating device 100 to the outside, and may block liquid outside the aerosol generating device 100 from entering the aerosol generating device 100.

Accordingly, an air pressure difference between the inside and the outside of the aerosol generating device 100 may be improved.

The membrane 50 may be made of fabric. The membrane 50 may be made of a synthetic resin. The synthetic resin may be selectively permeable. For example, the synthetic resin may be Gore-Tex.

The membrane 50 may have a lattice structure, but the present disclosure is not limited thereto. The membrane 50 may be formed in various shapes and thicknesses. A size of the membrane 50 may be greater than the size of the through-hole 42. The size of the membrane 50 may be less than the size of the recessed portion 44. The size of the membrane 50 may correspond to a size of an inner diameter of the through-hole 42, allowing the membrane 50 to be inserted into the through-hole 42.

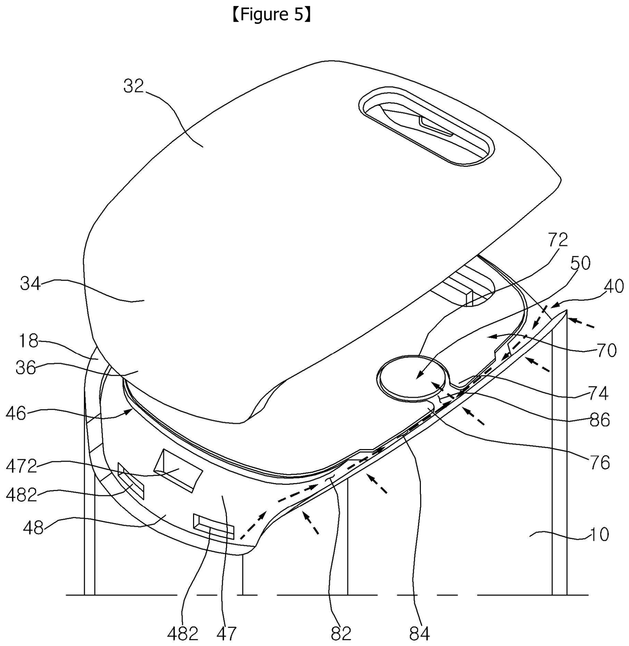

Referring to FIGS. 5 to 7, the aerosol generating device 100 may include the cover 30 to cover the another side of the body 10. The aerosol generating device 100 may include the gasket 70 disposed to be in contact with the cover 30.

The cover 30 may include a cover plate 32 covering the another side of the body 10. The cover 30 may be bent to form a curved surface in the longitudinal direction of the body 10.

A portion of a side surface of the body 10 may be cut such that the cover 30 is mounted to the body 10. The body 10 may be cut into a shape corresponding to a shape of the cover 30. When the cover 30 is coupled to the body 10, the base 40 may not be exposed to the outside.

The cover 30 may include a cover side portion 36 extending in a rounded manner. The cover side portion 36 may be formed horizontally with respect to the longitudinal direction of the body 10. The protrusion 362 may be formed inside the cover side portion 36. The protrusion 362 may be inserted into the recess 482 formed in the base 40, allowing the cover 30 to be mounted to the base 40. The protrusion 362 may be perpendicular to the cover side portion 36 toward the inside of the body 10. The protrusion 362 may be perpendicular to the longitudinal direction of the body 10.

The cover 30 may include a cover rounding portion 34 rounded to form a curved surface. The cover rounding portion 34 may correspond to the base rounding portion 47. The body 10 includes a recessed portion configured to accommodate the cover 30 when mounted to the body 10.

The guide rib 342 may be formed inside the cover rounding portion 34. The guide rib 342 may be formed in the longitudinal direction of the body 10. The guide rib 342 may be inserted into the guide recess 472 formed in the base 40. A charging slot 322 may be formed in the cover 30 to allow the charging terminal 164 of the charging module 16 to be exposed to the outside. The charging slot 322 may have a shape corresponding to the charging terminal 164. For example, the charging slot 322 may be formed in a rectangular shape with rounded corners.

The gasket 70 may be disposed between the base 40 and the cover 30. The gasket 70 may be in contact with the base 40 and/or the cover 30. The gasket 70 may be in contact with the foundation 46 of the base 40. A size of the gasket 70 may be less than a size of the base 40. The gasket 70 may have a shape corresponding to a shape of the foundation 46. The gasket 70 may have a plate shape. The gasket 70 may include a gasket hole 72 in which the membrane 50 is disposed. The gasket hole 72 may be configured to surround the membrane 50. The gasket hole 72 may be cut into a shape corresponding to a shape of the membrane 50. For example, the membrane 50 and the gasket hole 72 have the shape of a circle. The gasket hole 72 may be larger in size than the membrane 50.

The gasket 70 may include a cut-out portion 74 cut from the gasket hole 72 to an edge of the gasket 70. The cut-out portion 74 may have a predetermined width from the gasket hole 72. The cut-out portion 74 may define an opening between the gasket hole 72 and an edge of the gasket 70.

The cut-out portion 74 may extend from the gasket hole 72 toward a gap 20 formed between the body 10 and the cover 30. The cut-out portion 74 may extend from the gasket hole 72 toward the gap 20 defined between the body 10 and the cover 30 adjacent to each other to form the shortest flow path.

The gasket 70 may include a cut-out passage 86 formed between regions of the cut-out portion 74 spaced apart from each other. The cut-out passage 86 may allow air inside and outside of the aerosol generating device 100 to flow in and out of the aerosol generating device 100 through the through-hole 42. A width of the cut-out passage 86 may be less than a width of the gasket hole 72. The cut-out passage 86 may connect the gasket hole 72 and the gap 20 formed between the body 10 and the cover 30. A distance between the gasket 70 and the gap 20 formed between the body 10 and the cover 30 may gradually increase with increasing distance from the gasket hole 72. The gasket 70 may include a protruding portion 76 formed by a portion of the gasket 70 extending in a direction in which the cut-out portion 74 is formed. The protruding portion 74 may extend outwardly from an edge of the gasket 70. The protruding portion 76 may be spaced inward from the gap 20 formed between the body 10 and the cover 30 by a predetermined distance. A capillary passage 84 may be formed between the protruding portion 76 and the inner surface of the body 10. The capillary passage 84 may be connected to the cut-out passage 86.

The tapered passage 82 may be formed, in a direction in which the cut-out portion 74 of the gasket 70 is formed, between the inner surface of the body 10 and a remaining portion of the gasket 70 where the protruding portion 76 does not extend. A width of the tapered passage 82 may gradually increase as a distance from the gasket hole 72 increases. The width of the tapered passage 82 may gradually decrease as a distance from the capillary passage 84 decreases. The tapered passage 82 may be connected to a gap (not shown) formed between the cover rounding portion 34 and the base rounding portion 47. The tapered passage 82 may be connected to the capillary passage 84. The capillary passage 84 may connect the taper passage 82 and the cut-out passage 86.

The foundation 46 may include a dent portion 462 recessed inward from the base 40 by a predetermined depth. The tapered passage 82 may be formed between a side surface of the dent portion 462 and the inner surface of the body 10.

The foundation 46 may include a deck portion 464 that extends in a direction in which the cut-out portion 74 of the gasket 70 is formed, so as to be in contact with the inside of the body 10. The deck portion 464 may extend in a direction from the through-hole 42 toward outside. The deck portion 464 may be where an edge of the foundation 46 is extended. The protruding portion 76 of the gasket 70 may be disposed on the deck portion 464. The capillary passage 84 may be formed on the deck portion 464.

The gasket 70 may be disposed between the cover 30 and the base 40, and may allow the cover 30 to be fixed to the base 40. For example, the gasket 70 may be an adhesive member. As another example, the gasket 70 may be a double-sided adhesive member with a predetermined thickness.

The gasket 70 may not allow fluid to pass therethrough.

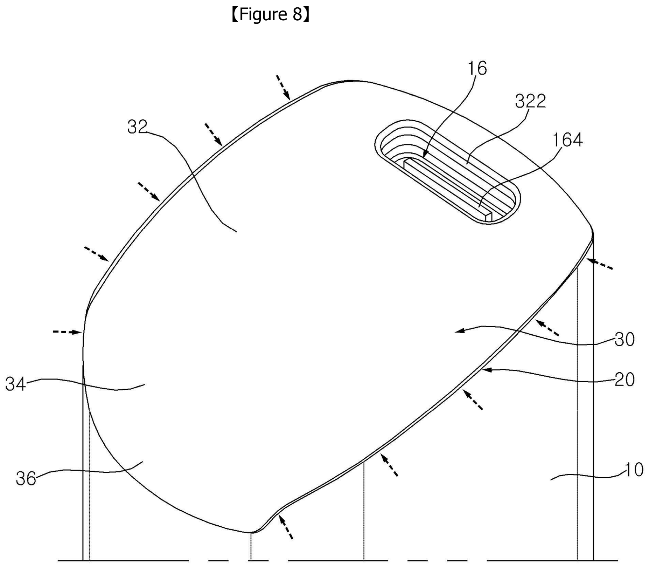

Referring to FIG. 8, the aerosol generating device 100 may include the gap 20 formed between the body 10 and the cover 30. The gap 20 may be formed along an edge where the body 10 and the cover 30 come into contact with each other. Air inside and outside the aerosol generating device 100 may be exchanged through the gap 20. Air introduced through the gap 20 may flow into the through-hole 42 through at least one of the tapered passage 82, the capillary passage 84, and the cut-out passage 86. The membrane 50 may block the entry of liquid introduced through the gap 20 into the aerosol generating device 100.

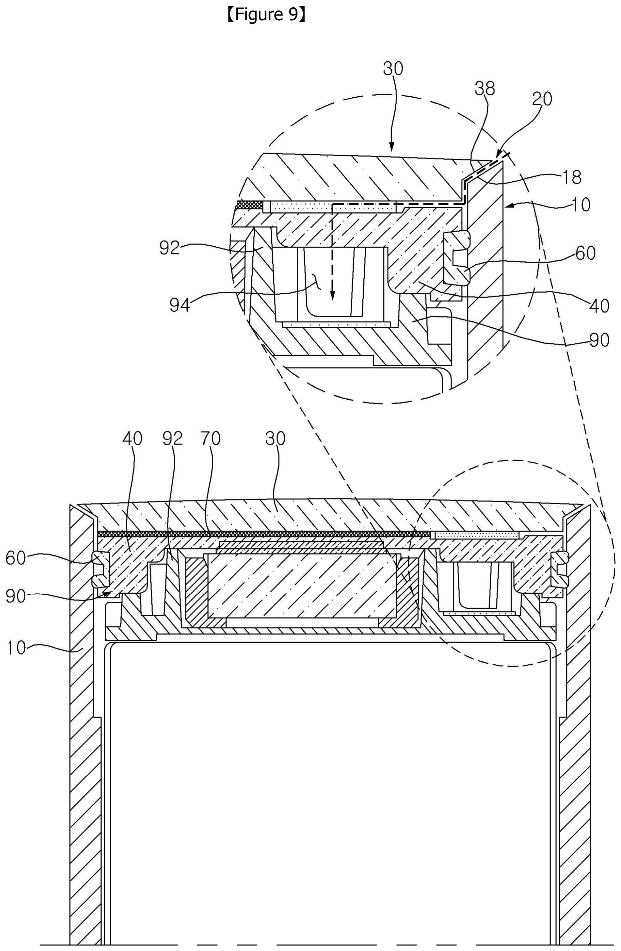

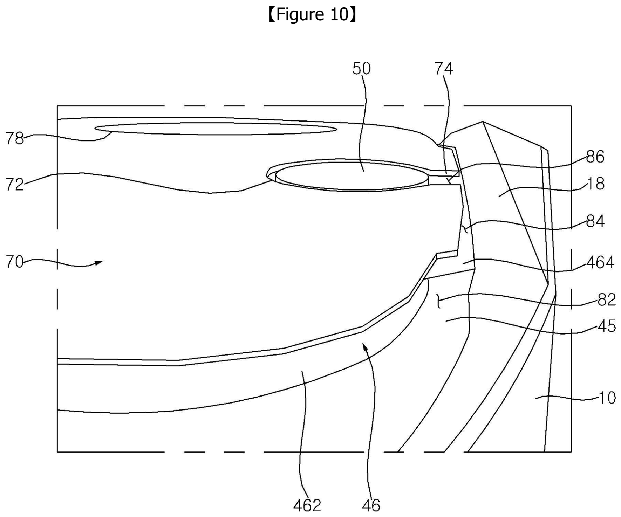

Referring to FIGS. 9 and 10, the gap 20 defined between the body 10 and the cover 30 may be formed in an inclined manner.

The cover 30 may have an inclined surface 38 adjacent to an edge of the cover 30 and facing the body 10. The inclined surface 38 of the cover 30 may be formed adjacent to the edge of the cover 30 defining the gap 20 connected to the cut-out portion 74 of the gasket 70. The inclined surface 38 of the cover 30 may be inclined outward of the cover 30. The inclined surface 38 of the cover 30 may be formed along an edge of the cover 30.

The body 10 may include an inclined surface 18 facing the inclined surface 38 of the cover 30. The inclined surface 18 of the body 10 may be formed at the edge of the body 10 defining the gap 20 connected to the cut-out portion 74 of the gasket 70. The inclined surface 18 of the body 10 may be inclined inward of the body 10. The inclined surface 18 of the body 10 may be inclined outwardly. The inclined surface 18 of the body 10 may be correspond to the inclined surface 38 of the inclined surface 38 of the cover 30.

The gap 20 may be formed by the inclined surface 38 of the cover 30 and the inclined surface 18 of the body 10.

The aerosol generating device 100 may further include a sealer 60 disposed between the base 40 and the inner surface of the body 10. The sealer 60 may have a loop shape disposed between the base 40 and the inner surface of the body 10. The sealer 60 may include ribs (no reference numeral) spaced apart along a length of the sealer 60 in a manner of extending parallel to each other so as to be in contact with the inner surface of the body 10, and a groove (no reference numeral) formed between the ribs.

The base 40 may be provided with a recess (no reference numeral) to which the sealer 60 is mounted. The recess may be formed along a side surface of the base 40 facing the inner surface of the body 10.

The aerosol generating device 100 may further include a bracket 90 to which the base 40 is mounted. The bracket 90 may be disposed inside the body 10. The bracket 90 may be provided with a protruding wall 92 that supports the base 40. The protruding wall 92 may allow the base 40 to be disposed perpendicular to the longitudinal direction of the body 10. The bracket 90 may include a hollow portion 94 that is surrounded by the protruding wall 92 to communicate with the through-hole 42 of the base 40. The battery 2 may be disposed on another side of the bracket 90 that is opposite to one side of the bracket 90 in contact with the base 40. The bracket 90 may be disposed between the battery 2 and the base 40.

Referring to FIGS. 1 to 12, an aerosol generating device according to one aspect of the present disclosure may include: an elongated body formed to provide an insertion space having an opening at a first end of the body and extending along a longitudinal direction of the body; a heater coupled to the body; a battery configured to supply power to the heater; a controller configured to control the power supplied to the heater; a through-hole formed at a second end of the body providing a passage between an inside and an outside of the body; and a membrane covering the through-hole.

According to another aspect of the present disclosure, the aerosol generating device may further include a base coupled to the second end of the body opposite to the first end of the body. The base may include the through-hole.

According to another aspect of the present disclosure, the base may include a recessed portion in a vicinity of the through-hole. The membrane may cover the through-hole from the recessed portion.

According to another aspect of the present disclosure, the recessed portion may have a size greater than a size of the through-hole, and the membrane may have a size greater than the size of the through-hole and less than the size of the recessed portion.

According to another aspect of the present disclosure, the membrane may be made of a synthetic resin.

According to another aspect of the present disclosure, the aerosol generating device may further include a cover to cover the second end of the body. The membrane may be disposed between the base and the cover.

According to another aspect of the present disclosure, the cover may include an inclined surface along an edge of the cover. The body may include an inclined surface corresponding to the inclined surface of the cover.

According to another aspect of the present disclosure, the inclined surface of the body may be outwardly inclined. The inclined surface of the cover may have a slope corresponding to the inclined surface of the body.

According to another aspect of the present disclosure, the aerosol generating device may further include a gasket disposed to be in contact with the base and the cover. The gasket may include a a gasket hole configured to surround the membrane, and a cut-out portion defining an opening between the gasket hole and an edge of the gasket.

According to another aspect of the present disclosure, the cut-out portion may extend from the gasket hole toward a gap formed between the body and the cover.

According to another aspect of the present disclosure, the gasket may be configured such that a distance between the edge of the gasket and a gap formed between the body and the cover gradually increases with an increasing distance laterally from the gasket hole.

According to another aspect of the present disclosure, the gasket may include a protruding portion extending outwardly from an edge of the gasket. The protruding portion may be spaced inward from the gap formed between the body and the cover.

According to another aspect of the present disclosure, the base may include a foundation having a raised flat surface to allow the gasket to be seated thereon.

According to another aspect of the present disclosure, the foundation may include: the through-hole; and a deck portion in which an edge of the foundation extends in a direction from the through-hole toward outside.

According to another aspect of the present disclosure, the gasket may be disposed between the cover and the base, so as to allow the cover to be fixed to the base.

According to another aspect of the present disclosure, the base and the cover each may comprise corresponding curved portions. The body may comprise a recessed portion configured to accommodate the cover when mounted to the body.

According to another aspect of the present disclosure, the base and the cover may include a curved base side portion and a curved cover side portion, respectively. The cover may be mounted to the base via a protrusion of the cover side portion being engaged with a recess formed at the base side portion.

According to another aspect of the present disclosure, the base and the cover may include a curved base rounding portion and a curved cover rounding portion, respectively. The cover rounding portion may be comprise a protruding guide rib, and the base rounding portion may comprise a guide recess configured to accommodate insertion of the guide rib.

Certain embodiments or other embodiments of the disclosure described above are not mutually exclusive or distinct from each other. Any or all elements of the embodiments of the disclosure described above may be combined with another or combined with each other in configuration or function.

For example, a configuration "A" described in one embodiment of the disclosure and the drawings, and a configuration "B" described in another embodiment of the disclosure and the drawings may be combined with each other. Namely, although the combination between the configurations is not directly described, the combination is possible except in the case where it is described that the combination is impossible.

Although embodiments have been described with reference to a number of illustrative embodiments thereof, it should be understood that numerous other modifications and embodiments can be devised by those skilled in the art that will fall within the scope of the principles of this disclosure. More particularly, various variations and modifications are possible in the component parts and/or arrangements of the subject combination arrangement within the scope of the disclosure, the drawings, and the appended claims. In addition to variations and modifications in the component parts and/or arrangements, alternative uses will also be apparent to those skilled in the art.

The present disclosure also provides for the following examples:
1. An aerosol generating device comprising:
   an elongated body formed to provide an insertion space having an opening at a first end of the body and extending along a longitudinal direction of the body;
   a heater coupled to the body;
   a battery configured to supply power to the heater;
   a controller configured to control the power supplied to the heater;
   a through-hole formed at a second end of the body providing a passage between an inside and an outside of the body; and
   a membrane covering the through-hole.
2. The aerosol generating device of example 1, further comprising a base coupled to the second end of the body opposite to the first end of the body, and
   wherein the base includes: the through-hole.
3. The aerosol generating device of example 2, wherein the base comprises a recessed portion in a vicinity of the through-hole, and
   wherein the membrane is disposed on the recessed portion to cover the through-hole.
4. The aerosol generating device of example 3, wherein a size of the recessed portion is greater than a size of the through-hole, and
   wherein a size of the membrane is greater than the size of the through-hole and less than the size of the recessed portion.
5. The aerosol generating device of example 2, further comprising a cover to cover the second end of the body,
   wherein the membrane is disposed between the base and the cover.
6. The aerosol generating device of example 5, wherein the cover comprises an inclined surface along an edge of the cover, and
   wherein the body comprises an inclined surface corresponding to the inclined surface of the cover.
7. The aerosol generating device of example 6, wherein the inclined surface of the body is outwardly inclined, and
   wherein the inclined surface of the cover has a slope corresponding to the inclined surface of the body.
8. The aerosol generating device of example 5, further comprising a gasket disposed to be in contact with the base and the cover,
   wherein the gasket comprises:
   a gasket hole configured to surround the membrane; and
   a cut-out portion defining an opening between the gasket hole and an edge of the gasket.
9. The aerosol generating device of example 8, wherein the cut-out portion extends from the gasket hole toward a gap formed between the body and the cover.
10. The aerosol generating device of example8, wherein the gasket is configured such that a distance between the edge of the gasket and a gap formed between the body and the cover gradually increases with an increasing distance laterally from the gasket hole.
11. The aerosol generating device of example 9, wherein the gasket comprises: a protruding portion extending outwardly from an edge of the gasket, and
   wherein the protruding portion is spaced inward from the gap formed between the body and the cover.
12. The aerosol generating device of example 8, wherein the base comprises a foundation having a raised flat surface to allow the gasket to be seated thereon.
13. The aerosol generating device of example 12, wherein the foundation comprises:
   the through-hole; and
   a deck portion in which an edge of the foundation extends in a direction from the through-hole toward outside.
14. The aerosol generating device of example 8, wherein the gasket is disposed between the cover and the base, so as to allow the cover to be fixed to the base.
15. The aerosol generating device of example 5, wherein the base and the cover each comprise corresponding curved portions, and
   wherein the body comprises a recessed portion configured to accommodate the cover when mounted to the body.
16. The aerosol generating device of example 15, wherein the base and the cover comprise a curved base side portion and a curved cover side portion, respectively,
   wherein the cover is mounted to the base via a protrusion of the cover side portion being engaged with a recess formed at the base side portion.
17. The aerosol generating device of example 15, wherein the base and the cover comprise a curved base rounding portion and a curved cover rounding portion, respectively,
   wherein the cover rounding portion comprises a protruding guide rib and the base rounding portion comprises a guide recess configured to accommodate insertion of the guide rib.

## Claims

1. An aerosol generating device comprising:
a body (10) that is elongated;
an insertion space (12) that extends in a longitudinal direction of the body (10), the insertion space (12) being formed as a first side of the body (10) is open;
a heater (6) embedded in the body (10), the heater (6) being disposed around the insertion space (12) to surround the insertion space (12);
a battery (2) configured to provide power to the heater (6);
a base (40) that defines a portion of a second side of the body (10) disposed opposite an opening formed in the first side of the body (10);
a through-hole (42) formed in the base (40), the through-hole (42) being formed through the body (10) to provide communication between an inside and an outside of the body (10);
a membrane (50) configured to cover the through-hole (42) and selectively allow a fluid to pass through, and
a cover (30) attached to the base (40) and covering the membrane (50),
wherein the base (40) comprises a guide recess (472) recessed in an inward direction of the body (10),
wherein the cover (30) comprises a guide rib (342) that protrudes from an inner surface of the cover (30) facing the base (40) and is inserted into the guide recess (472).

2. The aerosol generating device of claim 1, wherein the membrane (50) is attached to the base (40).

3. The aerosol generating device of claim 1, further comprising a charging module (16) embedded in the body (10) and configured to charge the battery (2),
wherein the charging module (16) comprises a charging terminal (164) connected to the battery (2),
wherein the base (40) has a charging hole (452) formed through the base (40),
wherein the cover (30) has a charging slot (322) that corresponds to the charging hole (452) and is formed through the cover (30), and
wherein the charging hole (452) and the charging slot (322) allow the charging terminal (164) to be exposed to an outside.

4. The aerosol generating device of claim 1, wherein the membrane (50) is disposed at an outer surface of the base (40) and has a size greater than a size of the through-hole (42).

5. The aerosol generating device of claim 1, further comprising:
a button hole (144) formed as one side of the body (10) is open; and
a button key (142) configured to be inserted into the button hole (144).

6. The aerosol generating device of claim 1, further comprising a cap (13) disposed at an upper portion of the body (10) and configured to open and close the insertion space (12).
